# FASCICULE DE BREVET EUROPEEN

(11) **EP 3 808 598 B1**
(45) Date de publication et mention de la délivrance du brevet: **30.08.2023**
(21) Numéro de dépôt: 20200025.3
(22) Date de dépôt: 05.10.2020
(51) Int. Cl.: B60N 2/879, B29C 44/12, B29L 31/30

(54) **PROCÉDÉ DE FABRICATION D'UN APPUI-TÊTE DE SIÈGE ÉQUIPÉ DE HAUT-PARLEURS**
VERFAHREN ZUR HERSTELLUNG EINER KOPFSTÜTZE EINES SITZES, DIE MIT LAUTSPRECHERN AUSGESTATTET IST
METHOD FOR MANUFACTURING A SEAT HEADREST PROVIDED WITH LOUDSPEAKERS

(30) Priorité: 17.10.2019 FR 1911611
(43) Date de publication de la demande: 21.04.2021
(73) Titulaire: Renault s.a.s, 92100 Boulogne Billancourt (FR)
(72) Inventeur: CHHEANG, Nakry, 78470 Saint Rémy les Chevreuses (FR); MARTIN-CALVO, Fernando, 75005 PARIS (FR)
(74) Mandataire: Renault Group

(56) Documents cités:
- EP-A1- 3 257 402
- FR-A7- 2 295 687
- US-A1- 2016 039 320

## Description

La présente invention concerne un procédé de fabrication d'un appui-tête de siège équipé de haut-parleurs.

Actuellement, certains sièges de véhicule comprennent des appui-têtes équipés de haut-parleurs.

La demande FR 2696388 décrit un appui-tête pour véhicule automobile, comportant une partie repose-tête munie d'au moins un haut-parleur apte à émettre des ondes sonores destinées à l'usager de l'appui-tête. Le haut-parleur constitue un terminal écouteur de radiotéléphone.

Le document EP 3 257 402 A1 décrit un procédé de fabrication d'un appui-tête de siège de véhicule selon le préambule de la revendication 1.

Un procédé selon l'invention permet de fabriquer un appui-tête de siège équipé de haut-parleurs, dont la position est optimisée pour transmettre directement et avec une bonne acoustique le son vers les oreilles d'une personne qui serait assise sur ledit siège.

L'invention a pour objet un procédé de fabrication d'un appui-tête de siège de véhicule.

Selon l'invention, le procédé comprend les étapes suivantes :
- une étape de placement d'une tige et d'une structure dans une découpe principale d'un garnissage,
- une étape de placement de deux supports de haut-parleurs dans deux découpes secondaires du garnissage,
- une étape de passage de deux connecteurs de haut-parleurs dans les deux découpes secondaires de garnissage et dans une ouverture de chaque support de haut-parleur,
- une étape de placement de l'ensemble résultant dans un moule d'injection de mousse,
- une étape d'injection de mousse afin d'obtenir un appui-tête doté d'une tige et d'une structure ainsi que des deux supports prêts chacun à accueillir un haut-parleur chaque support présentant un corps cylindrique creux dont une extrémité est obturée par une paroi assimilable à un fond et dont une autre extrémité est ouverte et possède une collerette élargie, les supports étant placés dans les découpes secondaires du garnissage de sorte que le bord du garnissage délimitant chaque découpe secondaire vienne en butée contre la collerette en enserrant le corps cylindrique.

Le principe d'un procédé selon l'invention est de pouvoir pré-positionner par rapport à un garnissage, qui constitue un revêtement d'aspect, tous les éléments constitutifs de l'appui-tête et en particulier les supports de haut-parleurs, puis d'injecter de la mousse dans ledit garnissage pour obtenir un appui-tête ayant une forme et des dimensions prédéfinies. Un tel procédé permet en particulier de parfaitement positionner les haut-parleurs dans l'appui-tête grâce à un pré-positionnement rigoureux des supports de haut-parleurs dans le garnissage. Au moment de l'étape d'injection de la mousse les supports peuvent par exemple être calés dans le moule afin de conserver un positionnement constant durant l'étape d'injection de la mousse. Les supports sont des pièces solides et creuses, destinées à accueillir chacune un haut-parleur. Il est supposé qu'une bonne étanchéité est assurée entre les supports de haut-parleur et le garnissage afin d'empêcher la mousse de fuiter par une ouverture malencontreuse entre un support et le garnissage. De même, il est supposé qu'il existe une bonne étanchéité entre le connecteur et l'ouverture de chaque support par laquelle passe ledit connecteur. La structure est destinée à assurer une bonne tenue mécanique de l'appui-tête et la tige peut par exemple présenter deux branches parallèles reliées par une branche de liaison s'étendant perpendiculairement auxdites branches parallèles. Cette tige permet de régler la hauteur de l'appui-tête dans un dossier au moyen d'un coulissement des deux branches parallèles dans ledit dossier. Les connecteurs des haut-parleurs sont également prépositionnés dans le garnissage et dans les supports avant l'étape d'injection de la mousse, car l'insertion de ces connecteurs serait rendue difficile voire impossible, après l'injection de la mousse dans le garnissage. L'étape d'injection de la mousse permet de gonfler l'appui-tête suivant une forme prédéfinie, dictée par les caractéristiques du garnissage. Afin de lever toute ambiguïté, l'ensemble résultant comprend le garnissage, les connecteurs de haut-parleurs, les supports de haut-parleurs, la structure et la tige.

Selon l'invention, chaque support présente un corps cylindrique creux dont une extrémité est obturée par une paroi assimilable à un fond et dont une autre extrémité est ouverte et possède une collerette élargie, les supports étant placés dans les découpes secondaires du garnissage de sorte que le bord du garnissage délimitant chaque découpe secondaire vienne en butée contre la collerette en enserrant le corps cylindrique. Le corps cylindrique creux est destiné à recevoir un haut-parleur. La collerette élargie est destinée à caler le garnissage autour du corps cylindrique creux de chaque support. La mousse est destinée à envahir l'espace délimité par le garnissage et situé derrière le corps cylindrique creux, de manière à laisser accessible l'intérieur dudit corps pour permettre le montage des haut-parleurs une fois que la mousse aura été injectée. Avantageusement, l'extrémité matérialisant le fond du corps cylindrique creux est représentée par une paroi circulaire plane.

Selon une caractéristique possible de l'invention, le bord du garnissage délimitant chaque découpe secondaire possède une nervure venant se placer dans un épaulement formé par le corps cylindrique et la collerette élargie d'un support de haut-parleur. Cette interaction particulière entre la nervure du garnissage et l'épaulement du support, va garantir une bonne étanchéité entre ces deux éléments afin notamment d'empêcher la mousse de déborder hors du garnissage.

Selon une caractéristique possible de l'invention, l'ouverture de chaque support de haut-parleur est réalisée dans le fond dudit support. Cette ouverture permet le passage des connecteurs afin que ceux-ci puissent déboucher dans le corps cylindrique creux de chaque support, et permettent une connexion électrique facile et rapide des haut-parleurs.

Selon une caractéristique possible de l'invention, le fond de chaque support de haut-parleur comprend un clapet monté mobile en rotation sur le support entre une position de fermeture pour laquelle il est aligné sur ledit fond et une position d'ouverture pour laquelle il est incliné par rapport audit fond en créant l'ouverture destinée au passage du connecteur. Ce clapet ne présente aucune fonction particulière en dehors de celle permettant le passage des connecteurs. Pour ce faire, le clapet est déplacé en rotation pour créer une ouverture afin de faire passer les connecteurs, puis est ensuite remis dans une position de fermeture pour diminuer voire annuler l'ouverture préalablement créée. Préférentiellement, le clapet est déformable plastiquement et le changement de position dudit clapet s'effectue au moyen d'un certain effort destiné à provoquer sa déformation.

Selon une caractéristique possible de l'invention, chaque clapet est d'abord placé dans la position d'ouverture pour le passage du connecteur et est ensuite replacé dans la position de fermeture en laissant subsister avec le support une fente. En effet, en replaçant le clapet dans la position de fermeture, il est inéluctable de créer une fente avec le fond de chaque corps cylindrique creux.

Selon une caractéristique possible de l'invention, le procédé comprend une étape d'obturation de l'ouverture de chaque support de haut-parleur après le passage du connecteur dans ladite ouverture et avant l'étape de placement de l'ensemble résultant dans le moule d'injection de mousse. En effet, une fois que les connecteurs ont été correctement positionnés dans les supports, il est nécessaire de boucher l'ouverture par laquelle ils ont dû passer pour déboucher dans les supports, sous peine de voir de la mousse déborder dans lesdits supports autour desdits connecteurs. Lorsque l'ouverture est créée par l'intermédiaire d'un clapet, l'étape d'obturation va concerner la fente qui subsiste entre le clapet en position de fermeture et le corps cylindrique creux de chaque support.

Selon une caractéristique possible de l'invention, l'étape d'obturation est réalisée au moyen d'une bande adhésive. Une bande adhésive est particulièrement simple à mettre en oeuvre et ne nécessite pas une précision de positionnement trop importante. Cette bande adhésive peut par exemple être une bande de papier.

Selon une caractéristique possible de l'invention, le procédé comprend une étape de passage des fils de branchement des haut-parleurs dans la tige de l'appui-tête. Il est important de pouvoir conduire toutes les étapes d'installation des différentes pièces concernant la mise en oeuvre des haut-parleurs avant l'étape d'injection de la mousse, car après, cela pourrait s'avérer très compliqué voire impossible.

L'invention a pour autre objet un appui-tête d'un siège de véhicule réalisé à partir d'un procédé conforme à l'invention.

Selon l'invention, l'appui-tête comprend deux avancées placées de part et d'autre d'une surface d'appui et destinées à border la tête d'une personne qui serait assise sur le siège, les deux haut-parleurs émergeant desdites avancées en étant orientés vers les oreilles de ladite personne. Un tel appui-tête possède l'originalité d'être assimilable à un casque audio qui serait placé à proximité des oreilles d'une personne qui serait assise sur le siège, préférentiellement à une distance comprise entre 2cm et 7cm. Cet appui-tête enveloppe la tête de ladite personne en proposant un son directif et de bonne qualité. Cette forme particulière d'appui-tête résulte de la forme initiale du garnissage. Il pourrait être envisagé une multiplicité de formes d'appui-tête réalisées au moyen d'un procédé selon l'invention, en sélectionnant une forme particulière de garnissage en début de procédé.

Un procédé de fabrication selon l'invention présente l'avantage de pouvoir fabriquer un appui-tête pouvant avoir tout type de forme et pouvant posséder divers éléments tels que par exemple des haut-parleurs. Il a de plus l'avantage de présenter une certaine souplesse d'utilisation, en permettant d'ajuster la position des haut-parleurs sur l'appui-tête pour obtenir une acoustique optimisée et un son émis dans une direction donnée.

On donne ci-après une description détaillée d'un mode de réalisation préféré d'un procédé de fabrication selon l'invention, en se référant aux figures suivantes :
[Fig. 1] représente une vue en perspective partielle d'un appui-tête de l'état de la technique,
[Fig. 2] représente une vue en perspective d'une zone supérieure d'un dossier de siège doté d'un appui-tête fabriqué à partir d'un procédé selon l'invention,
[Fig. 3] représente une vue du dessus d'un siège doté d'un appui-tête fabriqué à partir d'un procédé selon l'invention,
[Fig. 4] représente une vue en perspective éclatée d'un appui-tête fabriqué à partir d'un procédé selon l'invention,
[Fig. 5] représente une vue en coupe du dessus d'un appui-tête fabriqué à partir d'un procédé selon l'invention,
[Fig. 6] représente une vue agrandie d'une zone de l'appui-tête de la figure 5,
[Fig. 7] représente une vue en perspective d'un appui-tête fabriqué à partir d'un procédé selon l'invention, montrant un support de haut-parleur doté d'un clapet en position d'ouverture,
[Fig. 8] représente une vue en perspective d'un appui-tête fabriqué à partir d'un procédé selon l'invention, montrant un support de haut-parleur doté d'un clapet en position de fermeture,
[Fig. 9] représente une vue en perspective d'un appui-tête fabriqué à partir d'un procédé selon l'invention, montrant un support de haut-parleur dans lequel débouche un connecteur de haut-parleur,
[Fig. 10] représente une vue en perspective d'un appui-tête fabriqué à partir d'un procédé selon l'invention, montrant un support de haut-parleur dans lequel est fixé un haut-parleur,
[Fig. 11] représente une vue en perspective éclatée d'un appui-tête fabriqué à partir d'un procédé selon l'invention, montrant un support de haut-parleur, un haut-parleur et des vis de fixation dudit haut-parleur dans ledit support.

Pour rappel, un appui-tête 1 de l'état de la technique comprend une tige 2, une structure 3 un garnissage 4 et de la mousse 5. La tige 2 comprend deux branches latérales parallèles 6, 7 reliées par une branche de liaison 8 s'étendant perpendiculairement auxdits deux branches latérales 6, 7. Cette branche de liaison 8 relie une extrémité d'une branche latérale 6 à une extrémité de l'autre branche latérale 7 de sorte que la tige 2 a globalement une forme en U. La structure 3, qui est préférentiellement réalisée en plastique, est solidarisée à la tige 2. Le garnissage 4, qui est avantageusement réalisé en textile, enveloppe de la mousse 5 pour former un coussin dans lequel sont noyées la structure 3 et une zone de la tige 2 comprenant la branche de liaison 8. Lorsque l'appui-tête 1 est monté dans le dossier 9 d'un siège de véhicule, il est réglable en hauteur au moyen d'un coulissement des deux branches latérales 6, 7 de la tige 2 dans ledit dossier 9.

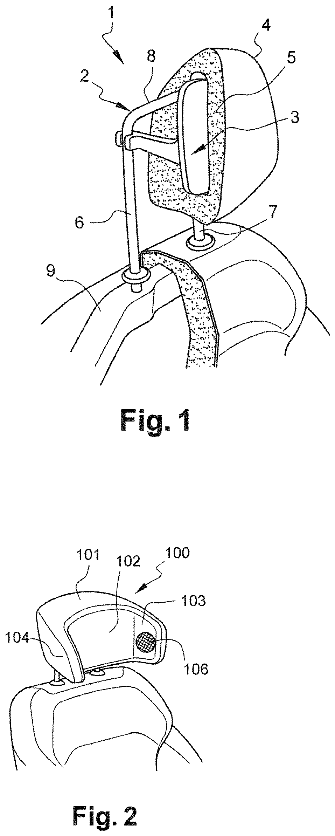

En se référant aux figures 2, 3 et 4 un appui-tête 100 fabriqué à partir d'un procédé selon l'invention, comprend un corps 101 doté d'une surface d'appui 102 contre laquelle est destinée à venir au contact la nuque d'un occupant qui serait assis sur le siège possédant ledit appui-tête 100. L'appui-tête 100 comprend deux avancées 103, 104 encadrant la surface d'appui 102 et dotées chacune d'un haut-parleur 105, 106. Les deux avancées 103, 104 sont légèrement divergentes l'une par rapport à l'autre depuis leur zone de liaison avec le corps 101.

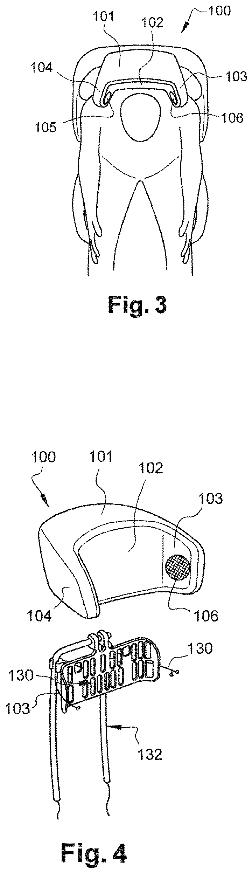

En se référant à la figure 3, un appui-tête 100 selon l'invention possède deux haut-parleurs 105, 107 orientés directement vers les oreilles d'un occupant qui serait assis sur le siège doté dudit appui-tête 100. De cette manière, le son sortant desdits haut-parleurs 105, 106 est directement capté par les oreilles dudit occupant pour une meilleure restitution sonore et une meilleure qualité d'écoute. L'appui-tête 100 peut ainsi s'apparenter à un casque audio enveloppant les oreilles de l'occupant tout en restant à une distance maximale de celles-ci comprise entre 2cm et 10cm.

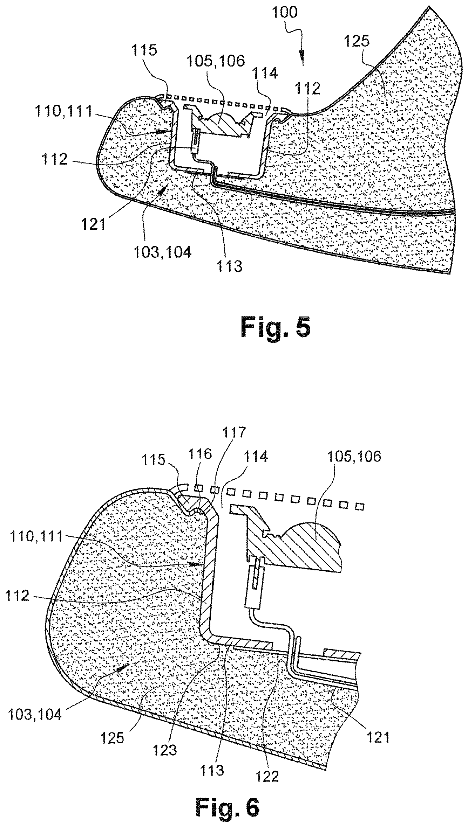

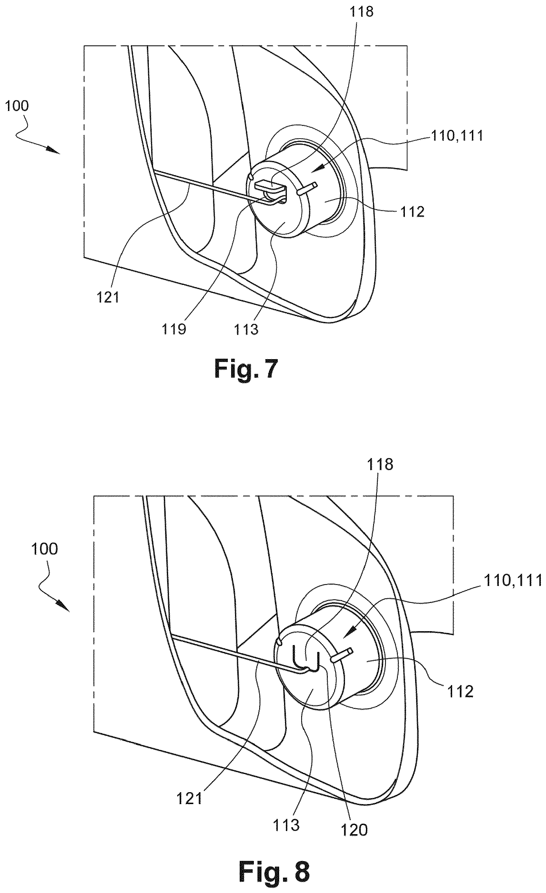

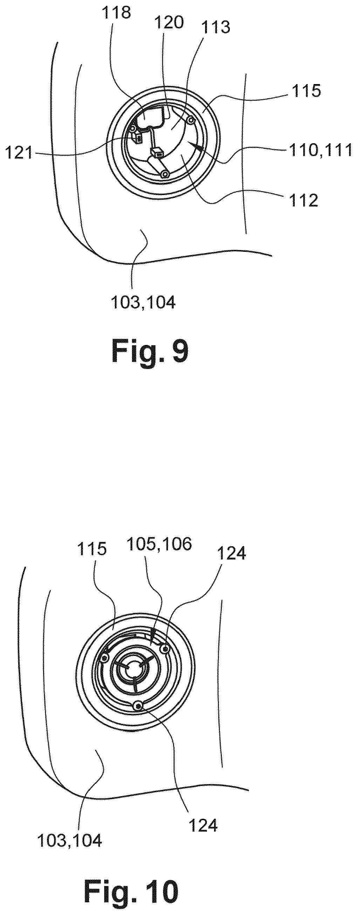

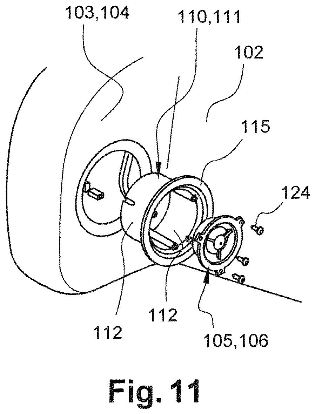

Afin d'obtenir un appui-tête 100 conforme à l'invention, c'est-à-dire semblable à celui qui est illustré aux figures 1, 3, 4 un procédé selon l'invention comprend les étapes suivantes :
- Une étape de placement d'une tige 132 et d'une structure 103 dans une découpe principale d'un garnissage. Le garnissage est une enveloppe, qui peut par exemple être réalisée en textile, et qui est destinée à imprimer la forme de l'appui-tête 100. Le garnissage correspond à la paroi qui va délimiter l'appui-tête 100. En se référant à la figure 4, la structure 103 et la tige 132 sont identiques à celles des appui-têtes 1 de l'état de la technique et en particulier, la tige 132 est identique à celle décrite ci-avant pour l'appui-tête 1 de l'état de la technique.
- Une étape de passage dans la tige 132 de fils de branchement 130 destinés à alimenter les haut-parleurs 105, 106 de l'appui-tête 100, comme illustré à la figure 4.
- Une étape de placement de deux supports 110, 111 de haut-parleurs 105, 106 dans deux découpes secondaires du garnissage. Ces deux découpes secondaires sont différentes de la découpe principale. En se référant aux figures 5, 6, 7 et 8, chaque support 110, 111 présente un corps cylindrique creux 112 dont une extrémité 113 est obturée par une paroi et correspond à un fond, et dont une autre extrémité 114 est ouverte et possède une collerette élargie 115. Les supports 110, 111 sont placés dans les découpes secondaires du garnissage de sorte que le bord du garnissage délimitant chaque découpe secondaire vienne en butée contre la collerette élargie 115. Plus précisément, le bord du garnissage délimitant chaque découpe secondaire, possède une nervure 116 venant se placer dans un épaulement 117 situé entre le corps cylindrique 112 et la collerette élargie 115 du support 110, 111. De cette manière, grâce à l'insertion de la nervure 116 dans l'épaulement 117, la liaison entre chaque support 110, 111 et le garnissage est étanche. En se référant aux figures 7 et 8, l'extrémité du corps cylindrique 112 constituant le fond 113 dudit corps 112, est une paroi circulaire dotée d'un clapet 118. Ce clapet 118 est monté pivotant entre une position d'ouverture comme illustré à la figure 7 et pour laquelle il s'étend dans un plan qui est perpendiculaire au plan de la paroi constituant le fond 113, et une position de fermeture pour laquelle il a pivoté d'un angle de 90° depuis la position d'ouverture, pour venir en continuité de la paroi constituant ledit fond 113. Dans la position d'ouverture, le clapet 118 créé une ouverture 119 dans le fond 113 du corps cylindrique creux 112, et dans la position de fermeture il ménage avec ledit fond 113 une fente 120 résiduelle ayant globalement une forme de U. Il est à noter que pour la position d'ouverture, le clapet 118 peut présenter une inclinaison qui est différente de 90° par rapport au plan de la paroi matérialisant le fond 113 du corps cylindrique creux 112. Avantageusement, le clapet 118 présente des aptitudes à la déformation plastique, et passe de la position d'ouverture à la position de fermeture et vice versa au moyen d'une déformation plastique,
- Une étape de passage de deux connecteurs 121 de haut-parleurs 105, 106 dans les deux découpes secondaires de garnissage et dans l'ouverture 119 de chaque support 110, 111 de haut-parleur, créée par le clapet 118 dans la position d'ouverture,
- Une étape de pivotement du clapet 118 jusqu'à la position de fermeture une fois que le connecteur 118 a été introduit dans l'ouverture 119 et débouche dans le corps cylindrique creux 112,
- Une étape d'obturation de la fente 120 résiduelle subsistant entre le clapet 118 dans la position de fermeture et le fond 113 du corps cylindrique creux 112, cette étape étant préférentiellement réalisée avec une bande adhésive 122 déposée sur une surface externe 123 du fond 113,
- Une étape de placement de l'ensemble résultant dans un moule d'injection de mousse, cet ensemble comprenant le garnissage, la tige 132, la structure 103, les deux supports 110, 111 de haut-parleur, les fils de branchement 130 et les connecteurs 121,
- Une étape d'injection de mousse 125 dans le garnissage, permettant notamment de gonfler le garnissage en le remplissant de mousse 125 pour lui faire adopter une forme définitive,
- Une étape d'obtention d'un appui-tête 100 doté d'une tige 132 et d'une structure 103 ainsi que des deux supports 110, 111 dans lesquels émergent les connecteurs 121 comme illustré à la figure 9 et prêts chacun à accueillir un haut-parleur 105, 106,
- Une étape d'introduction de chaque haut-parleur 105, 106 dans un support 110, 111 après avoir établi un enfichage du connecteur 121 dans ledit haut-parleur 105, 106, cette introduction se poursuivant jusqu'à ce que le haut-parleur 105, 106 vienne araser l'extrémité ouverte 114 de chaque support 110, 111 comme illustré à la figure 10,
- Une étape de fixation de chaque haut-parleur 105, 106 dans un support 110, 111 au moyen de trois vis 124 comme illustré aux figures 10 et 11.

## Revendications

1. Procédé de fabrication d'un appui-tête (1, 100) de siège de véhicule, comprenant les étapes suivantes:
- une étape de placement d'une tige (2, 132) et d'une structure (3, 103) dans une découpe principale d'un garnissage (4),
- une étape de placement de deux supports (110, 111) de haut-parleurs dans deux découpes secondaires du garnissage (4),
- une étape de passage de deux connecteurs (121) de haut-parleurs dans les deux découpes secondaires de garnissage (4) et dans une ouverture (119) de chaque support (110, 111) de haut-parleur,
- une étape de placement de l'ensemble résultant (2, 3, 4, 132, 103, 110, 111, 121) dans un moule d'injection de mousse,
- une étape d'injection de mousse (125) afin d'obtenir un appui-tête (100) doté d'une tige (132) et d'une structure (103) ainsi que des deux supports (110, 111) prêts chacun à accueillir un haut-parleur (105, 106),
**caractérisé en ce que** chaque support (110, 111) présente un corps cylindrique (112) creux dont une extrémité (113) est obturée par une paroi (113) assimilable à un fond et dont une autre extrémité (114) est ouverte et possède une collerette élargie (115), et **en ce que** les supports (110, 111) sont placés dans les découpes secondaires du garnissage (4) de sorte que le bord du garnissage délimitant chaque découpe secondaire vienne en butée contre la collerette (115) en enserrant le corps cylindrique (112).

2. Procédé de fabrication selon la revendication 1, **caractérisé en ce que** le bord du garnissage délimitant chaque découpe secondaire possède une nervure (116) venant se placer dans un épaulement (117) formé par le corps cylindrique (112) et la collerette élargie (115) d'un support (110, 111) de haut-parleur.

3. Procédé de fabrication selon l'une quelconque des revendications 1ou 2, **caractérisé en ce que** l'ouverture (119) de chaque support (110, 111) de haut-parleur est réalisée dans le fond (113) dudit support (110, 111).

4. Procédé de fabrication selon la revendication 3, **caractérisé en ce que** le fond (113) de chaque support (110, 111) de haut-parleur comprend un clapet (118) monté mobile en rotation sur le support (110, 111) entre une position de fermeture pour laquelle il est aligné sur ledit fond (113) et une position d'ouverture pour laquelle il est incliné par rapport audit fond (113) en créant l'ouverture (119) destinée au passage du connecteur (121).

5. Procédé de fabrication selon la revendication 4, **caractérisé en ce que** chaque clapet (118) est d'abord placé dans la position d'ouverture pour le passage du connecteur (121) et est ensuite replacé dans la position de fermeture en laissant subsister avec le support une fente (120).

6. Procédé de fabrication selon l'une quelconque des revendications 1 à 5, **caractérisé en ce qu'**il comprend une étape d'obturation de l'ouverture (119, 120) de chaque support (110, 111) de haut-parleur après le passage du connecteur (121) dans ladite ouverture (119) et avant l'étape de placement de l'ensemble résultant dans le moule d'injection de mousse.

7. Procédé de fabrication selon la revendication 6, **caractérisé en ce que** l'étape d'obturation est réalisée au moyen d'une bande adhésive (122).

8. Procédé de fabrication selon l'une quelconque des revendications 1 à 7, **caractérisé en ce qu'**il comprend une étape de passage des fils de branchement (130) des haut-parleurs (105, 106) dans la tige (132) de l'appui-tête (100).

9. Appui-tête (100) d'un siège de véhicule réalisé à partir d'un procédé conforme à l'une quelconque des revendications 1 à 8, **caractérisé en ce qu'**il comprend deux avancées (103, 104) placées de part et d'autre d'une surface (102) d'appui et destinées à border la tête d'une personne qui serait assise sur le siège, et **en ce que** les deux haut-parleurs (105, 106) émergent desdites avancées (103, 104) en étant orientés vers les oreilles de ladite personne.

## Patentansprüche

1. Verfahren zur Herstellung einer Kopfstütze (1, 100) für einen Fahrzeugsitz, umfassend die folgenden Schritte:
- einen Schritt des Platzierens einer Stange (2, 132) und einer Struktur (3, 103) in einem Hauptausschnitt eines Bezugs (4),
- einen Schritt des Platzierens von zwei Halterungen (110, 111) für Lautsprecher in zwei Nebenausschnitten des Bezugs (4),
- einen Schritt des Führens von zwei Steckverbindern (121) für Lautsprecher in die beiden Nebenausschnitte des Bezugs (4) und in eine Öffnung (119) jeder Halterung (110, 111) für Lautsprecher,
- einen Schritt des Platzierens der resultierenden Anordnung (2, 3, 4, 132, 103, 110, 111, 121) in einem Schaumspritzgießwerkzeug,
- einen Schritt des Spritzgießens von Schaum (125), um eine Kopfstütze (100) zu erhalten, die mit einer Stange (132) und einer Struktur (103) sowie mit zwei Halterungen (110, 111), die jeweils zum Aufnehmen eines Lautsprechers (105, 106) bereit sind, ausgestattet ist,
**dadurch gekennzeichnet, dass** jede Halterung (110, 111) einen hohlen zylindrischen Körper (112) aufweist, dessen eines Ende (113) durch eine Wand (113), die mit einem Boden vergleichbar ist, verschlossen wird, und dessen anderes Ende (114) offen ist und einen geweiteten Kragen (115) besitzt, und dadurch, dass die Halterungen (110, 111) in den Nebenausschnitten des Bezugs (4) so platziert sind, dass der jeden Nebenausschnitt begrenzende Rand des Bezugs an dem Kragen (115) zur Anlage gelangt und dabei den zylindrischen Körper (112) umspannt.

2. Herstellungsverfahren nach Anspruch 1, **dadurch gekennzeichnet, dass** der jeden Nebenausschnitt begrenzende Rand des Bezugs eine Rippe (116) besitzt, die in einer Schulter (117) platziert wird, die durch den zylindrischen Körper (112) und den aufgeweiteten Kragen (115) einer Halterung (110, 111) für Lautsprecher gebildet wird.

3. Herstellungsverfahren nach einem der Ansprüche 1 oder 2, **dadurch gekennzeichnet, dass** die Öffnung (119) jeder Halterung (110, 111) für Lautsprecher in dem Boden (113) der Halterung (110, 111) ausgeführt ist.

4. Herstellungsverfahren nach Anspruch 3, **dadurch gekennzeichnet, dass** der Boden (113) jeder Halterung (110, 111) für Lautsprecher eine Klappe (118) umfasst, die an der Halterung (110, 111) zwischen einer Schließstellung, in der sie mit dem Boden (113) fluchtet, und einer Öffnungsstellung, in der sie in Bezug auf den Boden (113) geneigt ist und dabei die zum Durchführen des Steckverbinders (121) bestimmte Öffnung (119) erzeugt, drehbeweglich gelagert ist.

5. Herstellungsverfahren nach Anspruch 4, **dadurch gekennzeichnet, dass** jede Klappe (118) zunächst in die Öffnungsstellung zum Durchführen des Steckverbinders (121) platziert wird und anschließend in die Schließstellung zurückplatziert wird, wobei ein Spalt (120) mit der Halterung bestehen bleibt.

6. Herstellungsverfahren nach einem der Ansprüche 1 bis 5, **dadurch gekennzeichnet, dass** es einen Schritt des Verschließens der Öffnung (119, 120) jeder Halterung (110, 111) für Lautsprecher nach dem Führen des Steckverbinders (121) in die Öffnung (119) und vor dem Schritt des Platzierens der resultierenden Anordnung in dem Schaumspritzgießwerkzeug umfasst.

7. Herstellungsverfahren nach Anspruch 6, **dadurch gekennzeichnet, dass** der Schritt des Verschließens mittels eines Klebebands (122) ausgeführt wird.

8. Herstellungsverfahren nach einem der Ansprüche 1 bis 7, **dadurch gekennzeichnet, dass** es einen Schritt des Führens der Anschlussadern (130) der Lautsprecher (105, 106) in die Stange (132) der Kopfstütze (100) umfasst.

9. Kopfstütze (100) für einen Fahrzeugsitz, die mit einem Verfahren nach einem der Ansprüche 1 bis 8 ausgeführt wird, **dadurch gekennzeichnet, dass** sie zwei Vorsprünge (103, 104) umfasst, die beidseits einer Stützfläche (102) platziert sind und dazu bestimmt sind, den Kopf einer Person, die auf dem Sitz sitzen würde, zu säumen, und dadurch, dass die beiden Lautsprecher (105, 106) aus den Vorsprüngen (103, 104) hervorragen, wobei sie zu den Ohren der Person hin gerichtet sind.

## Claims

1. Method for manufacturing a vehicle headrest (1, 100), comprising the following steps:
- a step of placing a rod (2, 132) and a structure (3, 103) in a main cut-out of a padding (4),
- a step of placing two loudspeakers supports (110, 111) in two secondary cut-outs of the padding (4),
- a step of passing two loudspeaker connectors (121) into the two secondary padding cut-outs (4) and into an opening (119) of each loudspeaker support (110, 111),
- a step of placing the resulting assembly (2, 3, 4, 132, 103, 110, 111, 121) in a foam injection mould,
- a step of injecting foam (125) in order to obtain a headrest (100) provided with a rod (132) and a structure (103) as well as two supports (110, 111) each ready to accommodate a loudspeaker (105, 106),
**characterized in that** each support (110, 111) has a hollow cylindrical body (112) of which one end (113) is blocked by a wall (113) that can be likened to a bottom and of which another end (114) is open and has a widened flange (115), and **in that** the supports (110, 111) are placed in the secondary cut-outs of the padding (4) such that the edge of the padding delimiting each secondary cut-out comes into abutment against the flange (115) while tightly gripping the cylindrical body (112).

2. Manufacturing method according to Claim 1, **characterized in that** the edge of the padding delimiting each secondary cut-out has a rib (116) that is placed in a shoulder (117) formed by the cylindrical body (112) and the widened flange (115) of a loudspeaker support (110, 111) .

3. Manufacturing method according to either one of Claims 1 and 2, **characterized in that** an aperture (119) of each loudspeaker support (110, 111) is produced in the bottom (113) of said support (110, 111).

4. Manufacturing method according to Claim 3, **characterized in that** the bottom (113) of each loudspeaker support (110, 111) comprises a flap (118) mounted to be movable in rotation on the support (110, 111) between a position of closure for which it is aligned on said bottom (113) and a position of opening for which it is inclined with respect to said bottom (113) creating the aperture (119) intended for the passing of the connector (121).

5. Manufacturing method according to Claim 4, **characterized in that** each flap (118) is first of all placed in the position of opening for the passing of the connector (121) and is then returned to the position of closure, allowing a slit (120) with the support to remain.

6. Manufacturing method according to any one of Claims 1 to 5, **characterized in that** it comprises a step of blocking of the aperture (119, 120) of each loudspeaker support (110, 111) after the passing of the connector (121) into said aperture (119) and before the step of placing the resulting assembly in the foam injection mould.

7. Manufacturing method according to Claim 6, **characterized in that** the blocking step is performed by means of an adhesive strip (122).

8. Manufacturing method according to any one of Claims 1 to 7, **characterized in that** it comprises a step of running connecting wires (130) of the loudspeakers (105, 106) in the rod (132) of the headrest (100).

9. Headrest (100) of a vehicle seat produced from a method according to any one of Claims 1 to 8, **characterized in that** it comprises two extensions (103, 104) placed on either side of a rest surface (102) and intended to border the head of a person who would be seated on the seat, and **in that** the two loudspeakers (105, 106) emerge from said extensions (103, 104) by being oriented towards the ears of said person.
